# FASCICULE DE BREVET EUROPEEN

(11) **EP 1 574 319 B1**
(45) Date de publication et mention de la délivrance du brevet: **20.09.2006**
(21) Numéro de dépôt: 05290341.6
(22) Date de dépôt: 16.02.2005
(51) Int. Cl.: B29C 53/58, B29K 105/08, B29K 501/12, B29K 509/08

(54) **Procédé d'enroulement d'un ruban composite et son dispositif de mise en oeuvre**
Wickelverfahren eines Verbundbandes und Vorrichtung zur Durchführung des Verfahrens
Winding method for a composite band and apparatus for performing such method

(30) Priorité: 09.03.2004 FR 0402450
(43) Date de publication de la demande: 14.09.2005
(73) Titulaire: Saint-Gobain Vetrotex France S.A., 73000 Chambéry (FR)
(72) Inventeur: Voiron, Jacques, 73160 St-Jean de Couz (FR); Zanella, Guy, 73160 Cognin (FR)
(74) Mandataire: Goldenberg, Virginie Isabelle

(56) Documents cités:
- FR-A- 2 656 826
- US-A- 3 565 726
- US-A- 6 096 164

## Description

L'invention concerne un procédé d'enroulement autour d'un corps d'un ruban composite à base de verre et de matière plastique au moyen d'un système de délivrance et de dépose qui comporte au moins un galet tournant, le procédé consistant en ce que le système de délivrance et de dépose du ruban effectue des mouvements de translation et/ou de rotation.

Un tel procédé permet de fabriquer notamment des corps creux composites tels que des tuyaux ou des réservoirs destinés à véhiculer ou respectivement contenir des fluides sous pression, le matériau composite permettant de rendre ces dispositifs légers tout en garantissant au cours du temps, une résistance à l'éclatement selon les normes en vigueur.

La demande de brevet WO 00/24566 décrit par exemple un procédé pour fabriquer de tels dispositifs, en particulier un corps de révolution creux dont la paroi est à base d'une matière organique thermoplastique A dans laquelle sont noyés en étant enroulés hélicoïdalement autour de l'axe du corps, des fils de verre continus. Selon ce procédé, on réalise, en ligne, les étapes suivantes :
a/ on enroule, de manière hélicoïdale un ruban à l'état chauffé autour d'un d'un tube en rotation dont au moins la face externe de la paroi est à base de la matière thermoplastique A, le ruban étant constitué de la même matière thermoplastique A et de filaments de verre continus noyés dans cette matière;
b/ on chauffe à une température supérieure à la température de fusion de la matière A, une partie de la surface périphérique extérieure du tube revêtue du ruban, dans une zone située immédiatement en aval de la zone de contact entre le ruban et le tube ;
c/ on applique une pression locale sur la partie de la surface périphérique extérieure du tube revêtue du ruban, dans une zone située immédiatement en aval de la zone de chauffe de l'étape c/.

L'enroulement du ruban est réalisé au moyen d'un système ou d'une tête de délivrance et de dépose mobile en translation et en rotation par rapport à la surface de dépôt du corps creux, l'angle d'inclinaison donné à la tête étant adapté à l'angle désiré d'enroulement hélicoïdal du ruban.

La tête de délivrance et de dépose comporte des galets tournants de forme hyperboloïde, parallèles entre eux et dont l'axe longitudinal est sensiblement perpendiculaire à la direction de défilement et d'approvisionnement du ruban qui est elle-même parallèle à l'axe de pivotement de la tête.

Le ruban est pris en sandwich entre les deux galets. Ils forment un embarrage qui calibre le ruban en épaisseur. Ces galets sont chauffants pour maintenir à la température adéquate (20 à 50°C au-dessus de la température de fusion de la matière thermoplastique) la matière thermoplastique du ruban.

Par ailleurs, ces galets tournent en continu par l'entraînement du ruban. Il arrive que durant le procédé, des fibrilles de matière composite dépassant du ruban se collent aux galets et s'agglutinent. Bien entendu, pour le bon entraînement du ruban et pour conserver son aspect, il est nécessaire d'enlever l'amas de matière composite déposé sur les galets, ce qui est réalisé manuellement en raclant leur surface durant le procédé d'enroulement.

Cette intervention qui s'avère impérative dans le procédé, impose cependant la présence d'un opérateur. De plus, le geste purement manuel effectué par l'opérateur sur ces systèmes de galets chauffants n'est pas sécuritaire. On pourrait imaginer un dispositif mécanique automatisé effectuant cette intervention à fréquence préalablement définie. Mais un tel dispositif serait compliqué, encombrant et son fonctionnement pas totalement efficace.

L'invention a donc pour but d'éviter les inconvénients précités lors de la mise en oeuvre d'un tel procédé.

Selon l'invention, le procédé est caractérisé en ce que le galet tournant est mis en arrêt de rotation lorsque le système de délivrance et de dépose effectue en continue un mouvement de translation, tandis qu'il est libéré en rotation durant le changement de direction et/ou de pivotement du système de délivrance et de dépose.

La rotation du galet est nécessaire pour conserver la forme et l'intégrité du ruban lors du pivotement du système de délivrance et de dépose; sinon, le ruban se concentre contre l'extrémité latérale du galet où s'applique la tension de bobinage la plus élevée. S'il s'est formé un début d'enroulement de fibrilles pendant la rotation du galet, cet enroulement se casse par abrasion lors du blocage du galet et est entraîné par le ruban; la quantité de matière ainsi entraînée étant très faible, elle est imperceptible sur le corps creux réalisé.

Selon une première variante, le galet est stoppé selon un freinage par friction.

Selon une seconde variante, le galet est stoppé selon un arrêt par coopération mutuelle d'un élément mâle et d'un élément femelle, l'un des éléments faisant partie du galet tournant.

Dans les deux variantes, le galet peut être stoppé par arrêt immédiat.

Selon une caractéristique, l'arrêt du galet est piloté par de moyens pneumatiques qui sont contrôlés par des moyens à commande numérique.

Selon une autre caractéristique, le ruban est maintenu à sa sortie du système de délivrance à une température au moins égale à celle de fusion de la matière plastique du ruban.

De préférence, le ruban composite comporte une pluralité de fils de verre et de matière thermoplastique intimement co-mêlés.

L'invention est également relative au dispositif de mise en oeuvre du procédé.

Le dispositif comprend notamment un système de délivrance et de dépose comportant au moins un galet tournant, des moyens d'arrêt aptes à stopper le galet tournant.

Selon une première variante, les moyens d'arrêt consistent en des éléments de coopération mutuelle avec le galet du type mâle-femelle, le galet comportant un des éléments mâle ou femelle.

Selon une seconde variante, les moyens d'arrêt consistent en des moyens de friction qui coopèrent avec le galet.

Les moyens de friction consistent avantageusement en au moins un élément qui présente une surface destinée à venir en appui contre une surface du galet tournant.

Selon une caractéristique, le galet comporte des joues d'extrémité latérale espacées de la largeur du ruban. De préférence, le dispositif comporte un autre galet sensiblement superposé au premier galet mais bloqué en rotation, et pourvu également de deux joues latérales, le ruban étant destiné à être tiré entre les deux galets qui constituent ainsi un système de conformation du ruban aux dimensions désirées (largeur et épaisseur).

De préférence, les moyens d'arrêt coopèrent avec au moins l'une des joues.

Selon une autre caractéristique, le galet tournant est chauffant.

Enfin, les moyens d'arrêt sont avantageusement activés par des moyens pneumatiques qui sont pilotés par des moyens à commande numérique.

D'autres avantages et caractéristiques de l'invention vont à présent être décrits plus en détail en regard des dessins annexés sur lesquels :
- la figure 1 illustre une représentation schématique générale d'un dispositif utilisé pour l'enroulement d'un ruban composite autour d'un corps creux ;
- la figure 2 illustre une vue détaillée de la figure 1 quant à l'enroulement du ruban;
- les figures 3 et 4 sont des vues de profil du système de délivrance du ruban pour l'enroulement selon respectivement une position de rotation et une position d'arrêt du galet tournant du système ;
- les figures 5 à 7 sont des variantes de réalisation des moyens d'arrêt du galet tournant du système de délivrance du ruban.

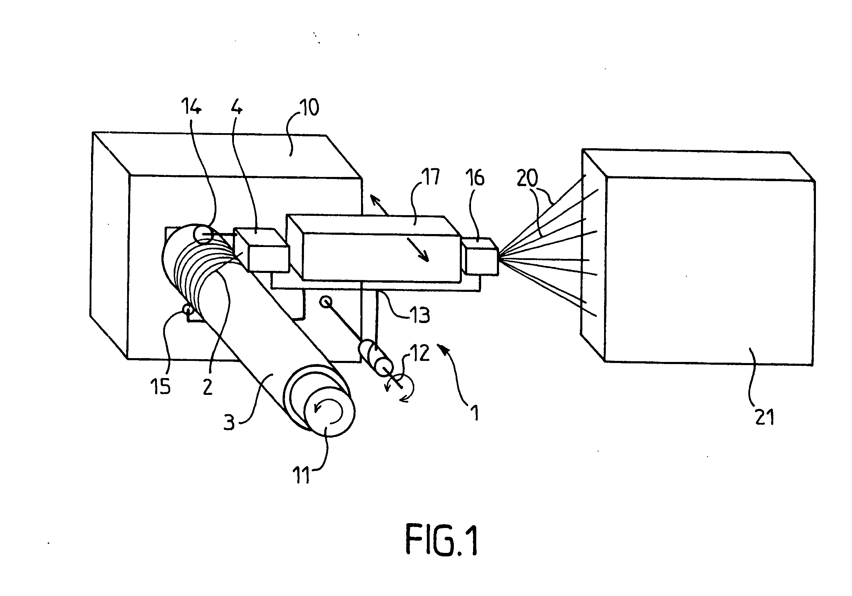

La figure 1 est une représentation schématique générale du dispositif 1 utilisé pour l'enroulement d'un ruban composite 2 autour d'un corps creux 3, par exemple un tube extrudé en matière plastique.

Le dispositif 1 comporte un bâti 10 logeant un moteur et le système de synchronisation des différents mouvements à piloter, non représentés.

De ce bâti sort un mandrin 11 apte à être mis en rotation et dont la section est expansée par gonflage de façon que le tube 3 soit emmanché sur lui avec un jeu serré. De ce bâti 10 sort également un arbre 12 dont la rotation assure le déplacement d'un ensemble chariot 13 en translation parallèlement au mandrin 11.

Cet ensemble chariot 13 supporte un système ou tête 4 de délivrance et de pose du ruban 2.

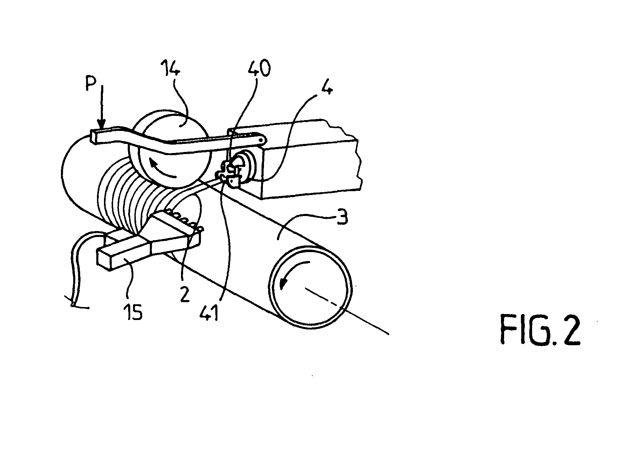

L'ensemble chariot peut également supporter un galet presseur 14, et un élément chauffant 15 (figure 2). Le réglage en hauteur du galet presseur et la pression de contact représentée par la flèche P sont assurés par un vérin pneumatique non représenté. L'élément chauffant tel qu'un chauffage radiant au gaz est disposé en regard du tube, à une distance de quelques centimètres.

La mise en oeuvre du galet presseur 14 et de l'élément chauffant 15 est effectuée de suite après la pose du ruban, ou bien une fois l'enroulement terminé, de manière à chauffer localement la surface périphérique extérieure du tube et appliquer sur cette surface extérieure une pression pour solidariser pleinement le ruban 2 avec le tube 3.

Le ruban composite 2 est constitué de fils de verre et de matière thermoplastique. Il s'agit par exemple de fils co-mêlés de verre et de polypropylène commercialisés sous la dénomination commerciale Twintex® par la société Saint-Gobain Vetrotex. Un tel ruban est par exemple fabriqué à partir de bobines de fils du type Twintex® selon le procédé explicité dans la demande de brevet WO 00/24566 ou dans la demande EP 1 093 900 dont les parties explicatives à ce sujet sont incorporées ici en référence.

Aussi, le ruban est soit fabriqué en amont du dispositif d'enroulement et en continu pour être acheminé directement dans le système de délivrance et de dépose 20 tel que schématiquement illustré sur la figure 1 et décrit dans la demande WO 00/24566, soit déroulé depuis un support comportant une bobine de ruban telle que obtenue selon la demande EP 1 093 900, puis introduit dans le système de délivrance et de dépose 20.

Selon la figure 1, les fils co-mêlés continus 20 de verre et de matière thermoplastique issus de bobines déroulées illustrées schématiquement par le bloc 21 sont tout d'abord assemblés sous la forme d'une nappe de fils parallèles entre eux. Cette nappe passe à travers un dispositif de tension 16 qui la met sous tension, puis à l'intérieur d'une enceinte chauffante et au travers d'un système d'embarrage tels que le bloc schématique 17 pour améliorer l'imprégnation de la matière thermoplastique dans les filaments de verre. L'enceinte chauffante est par exemple constituée d'un ou de deux fours du type lampes à infrarouge. A la sortie de ce bloc 17, la nappe a été transformée en ruban qui défile alors au travers de la tête de délivrance et de dépose.

A noter que lorsque le ruban est fabriqué en continu dans le procédé d'enroulement, il passe au travers d'un ou plusieurs fours de l'enceinte chauffante; ces fours sont avantageusement configurés pour tourner selon un angle de rotation similaire à l'angle d'inclinaison de la tête de délivrance et de dépose 4 par rapport à l'axe de défilement du ruban jusqu'à la tête. Cette rotation des fours permet de suivre l'inclinaison du ruban de façon à ne pas créer de tension sur les bords extérieurs du ruban lors de la rotation de la tête, et à obtenir une chauffe uniforme du ruban.

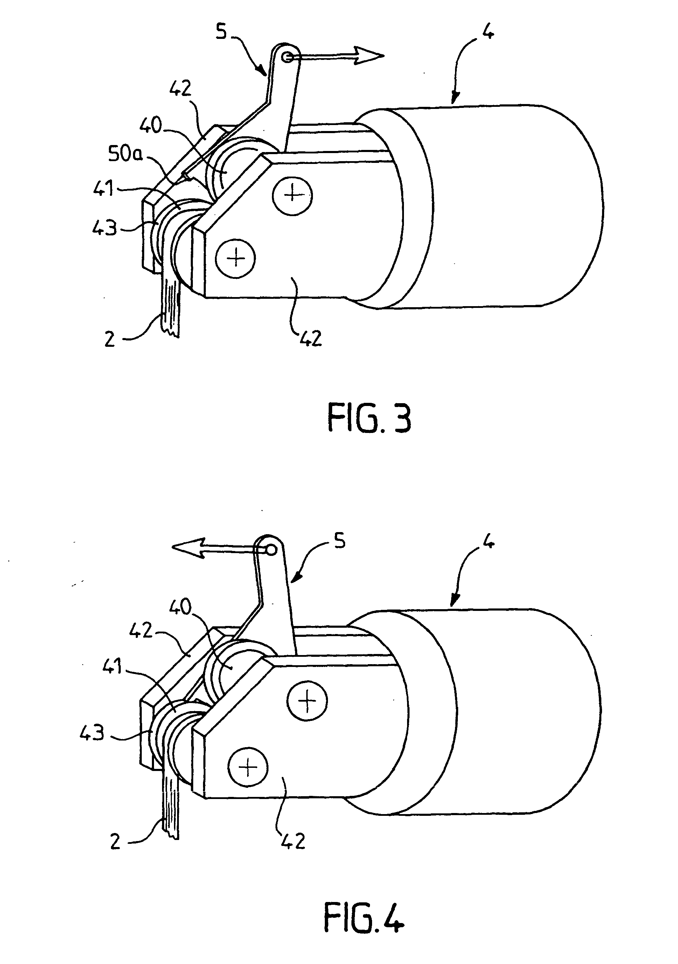

La tête de délivrance et de dépose 4 du ruban 2 illustrée sur les figures 3 et 4 comporte deux galets amont 40 et aval 41 sensiblement superposés, le galet aval étant celui sur lequel repose le ruban et le plus proche du tube. Ils sont chauffants. Le galet amont est bloqué en rotation alors que le galet aval est apte à tourner.

Ces galets sont supportés à leurs extrémités par des flasques 42 solidaires du corps de la tête de délivrance. Le galet aval est apte à tourner par la traction et l'entraînement du ruban qui passe, pris en sandwich, entre les deux galets.

Ils sont chauffants à l'aide d'une résistance chauffante non illustrée, installée dans le corps creux des galets. La température de chauffe et de régulation permet de maintenir le ruban à sa sortie de la tête de délivrance à une température supérieure d'environ 20 à 50°C au-dessus de la température de fusion de la matière thermoplastique constituant le Twintex®.

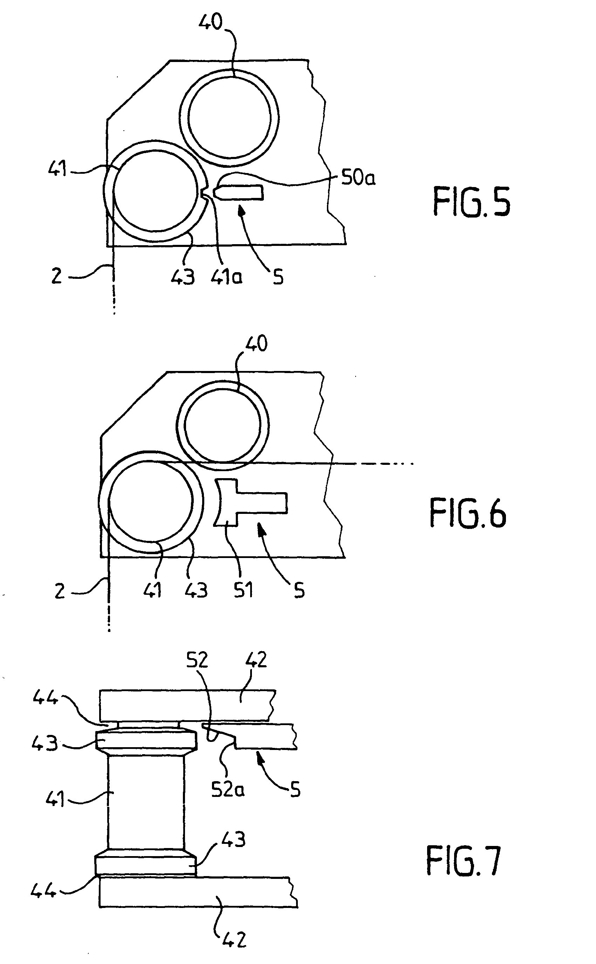

Les galets 40 et 41 sont avantageusement cylindriques et comprennent de préférence des joues d'extrémité latérale 43 qui sont visibles sur la figure 5. Ces joues sont espacées d'une grandeur correspondante à la largeur du ruban. Ainsi le ruban est maintenu dans ses dimensions lorsqu'il tend notamment à glisser vers un bord du galet, donc contre une joue, lors d'une rotation de la tête.

Les joues 43 sont donc parallèles aux flasques 42, mais sans y être plaquées en laissant donc un léger jeu 44 pour assurer la rotation au moins du galet 41.

L'enroulement du ruban autour du tube est obtenu par l'inclinaison adéquate de la tête et par le déplacement selon une pluralité d'allers-retours de celle-ci parallèlement à l'axe longitudinal du tube. En bout de course, c'est-à-dire à l'extrémité du tube, lorsqu'il convient de changer de direction, il est également nécessaire d'effectuer une rotation ou pivotement de la tête 20 selon le bon angle pour assurer l'enroulement hélicoïdal attendu.

Selon l'invention, c'est au moment du changement de mouvement (sens de translation et/ou de rotation) de la tête de délivrance et de dépose que le galet aval 41 est libéré pour tourner. Des moyens adaptés d'arrêt 5 sont prévus pour coopérer avec le galet. Ils sont activés pour bloquer en rotation le galet ou désactivés pour laisser librement le galet tourner, par des moyens pneumatiques pilotés par commande numérique. Dès que le changement de mouvement est effectué, c'est-à-dire que la tête est à nouveau selon le bon sens de translation désiré et selon le bon angle d'inclinaison voulu, le blocage de la rotation du galet est effectuée en activant les moyens d'arrêt.

Sur les figures 3 et 4 sont illustrés un exemple de moyens d'arrêt 5 qui sont également visibles schématiquement sur la figure 5. Il s'agit de moyens mécaniques de coopération mutuelle avec le galet, du type éléments mâle-femelle, qui stoppent instantanément le galet.

On conçoit ainsi au moins un frein 50 actionnable selon le sens des flèches des figure 3 et 4 qui comporte une saillie 50a qui coopère avec un évidemment 41 a prévu sur la tranche de la joue 43 du galet. Si le galet ne comportait pas de joue, cet évidemment serait prévu sur la surface du corps longitudinal du galet.

En variante, la saillie du frein 50 pourrait traverser un flasque 42 de la tête et être actionné pour coopérer avec un évidemment situé sur la face d'une joue 42 du galet, en regard du flasque.

On peut bien entendu concevoir que l'élément femelle appartienne au frein 50 tandis que le galet est pourvu dans l'une de ses parties de l'élément mâle.

Dans un autre mode de réalisation, les moyens d'arrêt 5 sont par exemple des moyens de friction qui freinent et arrêtent le galet. Suivant la pression exercée par ces moyens de friction, l'arrêt peut être immédiat.

Sur la figure 6 est illustré au moins un sabot 51 qui est apte à venir en appui contre la surface du galet 41, ici plus particulièrement contre la tranche de l'une des joues 43, pour stopper la rotation.

Dans la variante de la figure 7, les moyens de friction consistent en un doigt 52 muni d'un épaulement 52a, le doigt étant destiné à être introduit dans la gorge formée par le jeu 44 entre un flasque 42 de la tête et la joue adjacente 43 du galet 41, tandis que l'épaulement vient alors en butée contre la tranche de la joue 43 pour assurer l'arrêt de la rotation.

Le procédé d'enroulement du ruban va à présent être décrit.

Le corps creux est emmanché autour du mandrin 11 qui est mis en rotation.

Le ruban composite 2 est introduit dans le système de délivrance et de pose 4, il passe entre les deux galets 40 et 41 et est tiré jusqu'au niveau du corps creux pour y être mis en contact.

Le mandrin étant en rotation, le ruban en contact avec le corps creux est alors entraîné par traction.

De manière à enrouler le ruban sur la longueur du corps, le système 4 est mis en mouvement selon une translation parallèle au corps, le galet 41 étant bloqué en rotation.

Lorsque le système 4 arrive à une extrémité du corps, on le pilote pour effectuer sa translation dans le sens inverse, et éventuellement on le fait pivoter de l'angle désiré pour enrouler le ruban selon l'angle correspondant et voulu par rapport à l'axe du corps. A cet instant de changement de mouvements, on libère les moyens d'arrêt 5 en les désactivant pour assurer la rotation du galet 41.

Dès la reprise de la translation dans le sens souhaité, et le pivotement effectué du système 4, le galet 41 est à nouveau bloqué en rotation en activant les moyens d'arrêt 5.

Les opérations de blocage et de libération du galet sont répétées à chaque changement de mouvement du système 4 jusqu'à la fin de l'enroulement au moment duquel on coupe le ruban.

Une complète solidarisation du ruban avec le corps creux et permettant une réduction du taux de vide est réalisée par l'application du galet presseur 14 et de l'élément chauffant 15.

Après refroidissement du corps creux revêtu du ruban, celui-ci est retiré du mandrin.

## Revendications

1. Procédé d'enroulement d'un ruban composite (2) à base de verre et de matière plastique autour d'un corps (3) au moyen d'un système de délivrance et de dépose (4) qui comporte au moins un galet tournant (41), le procédé consistant en ce que le système de délivrance et de dépose (4) du ruban effectue des mouvements de translation et/ou de pivotement, **caractérisé en ce que** le galet tournant (41) est mis en arrêt de rotation lorsque le système de délivrance et de dépose (4) effectue en continu un mouvement de translation, tandis qu'il est libéré en rotation durant le changement de direction et/ou de pivotement du système de délivrance et de dépose (4).

2. Procédé selon la revendication 1, **caractérisé en ce que** le galet est stoppé selon un freinage par friction.

3. Procédé selon la revendication 1 ou 2, **caractérisé en ce que** le galet est stoppé selon un arrêt par coopération mutuelle d'un élément mâle et d'un élément femelle, l'un des éléments faisant partie du galet tournant (41).

4. Procédé selon l'une des revendications 1 à 3, **caractérisé en ce que** le galet est stoppé par arrêt immédiat.

5. Procédé selon l'une quelconque des revendications précédentes, **caractérisé en ce que** l'arrêt du galet est piloté par de moyens pneumatiques qui sont contrôlés par des moyens à commande numérique.

6. Procédé selon l'une quelconque des revendications précédentes, **caractérisé en ce que** le ruban (2) est maintenu à sa sortie du système de délivrance à une température de fusion au moins égale à celle de la matière plastique du ruban.

7. Procédé selon l'une quelconque des revendications précédentes, **caractérisé en ce que** le ruban composite (2) comporte une pluralité de fils de verre et de matière thermoplastique intimement co-mélés.

8. Dispositif pour la mise en oeuvre du procédé selon l'une des revendications 1 à 7, **caractérisé en ce qu**'il comporte notamment un système de délivrance et de dépose (4) comportant au moins un galet tournant (41), des moyens d'arrêt (5) aptes à stopper le galet tournant (41).

9. Dispositif selon la revendication 8, **caractérisé en ce que** les moyens d'arrêt (5) consistent en des éléments (50a, 41a) de coopération mutuelle avec le galet du type mâle-femelle, le galet comportant un des éléments mâle ou femelle.

10. Dispositif selon la revendication 8, **caractérisé en ce que** les moyens d'arrêt (5) consistent en des moyens de friction qui coopèrent avec le galet.

11. Dispositif selon la revendication 10, **caractérisé en ce que** les moyens de friction consistent en au moins un élément (51,52) qui présente une surface destinée à venir en appui contre une surface du galet tournant.

12. Dispositif selon l'une des revendications 8 à 11, **caractérisé en ce que** le galet (41) comporte des joues d'extrémité (43) espacées de la largeur du ruban.

13. Dispositif selon la revendication 12, **caractérisé en ce que** les moyens d'arrêt (5) coopèrent avec au moins l'une des joues (43).

14. Dispositif selon l'une des revendications 8 à 13, **caractérisé en ce que** le galet tournant est chauffant.

15. Dispositif selon l'une des revendications 8 à 14, **caractérisé en ce qu**'il comporte des moyens pneumatiques actionnant les moyens d'arrêt (5).

16. Dispositif selon l'une des revendications 8 à 15, **caractérisé en ce qu**'il comporte un autre galet (40) bloqué en rotation, sensiblement superposé au galet tournant (41), et pourvu de deux joues latérales, le ruban étant destiné à être tiré entre les deux galets qui constituent ainsi un système de conformation du ruban aux dimensions désirées.

## Claims

1. Process for winding a composite tape (2) based on glass and plastic around a body (3) using a delivery and deposition system (4) which comprises at least one rotating roller (41), the process being one in which the tape delivery and deposition system (4) makes translation and/or pivoting movements, **characterized in that** the rotating roller (41) is stopped from rotating when the delivery and deposition system (4) makes a continuous translation movement, whereas it is released for rotation during the change of direction and/or of pivoting of the delivery and deposition system (4).

2. Process according to Claim 1, **characterized in that** the roller is stopped by friction braking.

3. Process according to either of Claims 1 and 2, **characterized in that** the roller is stopped by mutual cooperation of a male element and a female element, one of the elements forming part of the roller (41).

4. Process according to one of Claims 1 to 3, **characterized in that** the roller is stopped by an immediate stop.

5. Process according to any one of the preceding claims, **characterized in that** the stopping of the roller is controlled by pneumatic means which are controlled by digital control means.

6. Process according to any one of the preceding claims, **characterized in that** the tape (2) is maintained at its outlet from the delivery system at a melting point at least equal to that of the plastic of the tape.

7. Process according to any one of the preceding claims, **characterized in that** the composite tape (2) comprises a plurality of intimately comingled glass and thermoplastic filaments.

8. Device for implementing the process according to one of Claims 1 to 7, **characterized in that** it comprises in particular a delivery and deposition system (4) comprising at least one rotating roller (41), and stopping means (5) able to stop the roller (41) from rotating.

9. Device according to Claim 8, **characterized in that** the stopping means (5) consist of elements (50a, 41a) of the male-female type cooperating mutually with the roller, the roller comprising one of the male or female elements.

10. Device according to Claim 8, **characterized in that** the stopping means (5) consist of friction means which cooperate with the roller.

11. Device according to Claim 10, **characterized in that** the friction means consist of at least one element (51, 52) which has a surface designed to bear against a surface of the rotating roller.

12. Device according to one of Claims 8 to 11, **characterized in that** the roller (41) comprises end cheeks (43) spaced by the width of the tape.

13. Device according to Claim 12, **characterized in that** the stopping means (5) cooperate with at least one of the cheeks (43).

14. Device according to one of Claims 8 to 13, **characterized in that** the roller is a heated roller.

15. Device according to one of Claims 8 to 14, **characterized in that** it comprises pneumatic means actuating the stopping means (5).

16. Device according to one of Claims 8 to 15, **characterized in that** it comprises another roller (40) stopped from rotating, substantially superimposed on the roller (41), and provided with two lateral cheeks, the tape being designed to be drawn between the two rollers which thereby constitute a system for conforming the tape to the desired dimensions.

## Patentansprüche

1. Verfahren zum Aufwickeln eines Verbundbandes (2) auf der Basis von Glas und Kunststoff um einen Körper (3) mittels eines Abgabe- und Ablegesystems (4), das mindestens eine sich drehende Führungsrolle (41) umfasst, wobei das Verfahren darin besteht, dass das Abgabe- und Ablegesystem (4) für das Band Translations- und/oder Schwenkbewegungen ausführt, **dadurch gekennzeichnet, dass** die Rotation der sich drehenden Führungsrolle (41) angehalten wird, wenn das Abgabe- und Ablegesystem (4) kontinuierlich eine Translationsbewegung ausführt, während ihre Rotation bei dem Richtungs- und/oder Schwenkwechsel des Abgabe- und Ablegesystems (4) freigegeben wird.

2. Verfahren nach Anspruch 1, **dadurch gekennzeichnet, dass** die Führungsrolle durch einen Bremsvorgang mittels Reibung angehalten wird.

3. Verfahren nach Anspruch 1 oder 2, **dadurch gekennzeichnet, dass** die Führungsrolle bei einer Unterbrechung durch wechselseitiges Zusammenwirken eines vorstehenden und eines vertieften Elements, wobei eines der Elemente ein Bestandteil der sich drehenden Führungsrolle (41) ist, angehalten wird.

4. Verfahren nach einem der Ansprüche 1 bis 3, **dadurch gekennzeichnet, dass** die Führungsrolle durch eine sofortige Unterbrechung angehalten wird.

5. Verfahren nach einem der vorhergehenden Ansprüche, **dadurch gekennzeichnet, dass** das Anhalten der Führungsrolle von pneumatischen Mitteln gesteuert wird, die von numerischen Regelungsmitteln geregelt werden.

6. Verfahren nach einem der vorhergehenden Ansprüche, **dadurch gekennzeichnet, dass** das Band (2) nach dem Abgabesystem auf einer Schmelztemperatur gehalten wird, die mindestens gleich derjenigen des Kunststoffs des Bandes ist.

7. Verfahren nach einem der vorhergehenden Ansprüche, **dadurch gekennzeichnet, dass** das Verbundband (2) eine Vielzahl von innig miteinander vermischten Fäden aus Glas und aus einem thermoplastischen Material umfasst.

8. Vorrichtung zur Durchführung des Verfahrens nach einem der Ansprüche 1 bis 7, **dadurch gekennzeichnet, dass** sie insbesondere ein Abgabe- und Ablegesystem (4) umfasst, das mindestens eine sich drehende Führungsrolle (41) und Unterbrechungsmittel (5), die in der Lage sind, die sich drehende Führungsrolle (41) anzuhalten, umfasst.

9. Vorrichtung nach Anspruch 8, **dadurch gekennzeichnet, dass** die Unterbrechungsmittel (5) aus Elementen (50a, 41a) vom Typ vorstehend/vertieft für das gegenseitige Zusammenwirken mit der Führungsrolle bestehen, wobei die Führungsrolle eines vom vorstehenden oder vertieften Element enthält.

10. Vorrichtung nach Anspruch 8, **dadurch gekennzeichnet, dass** die Unterbrechungsmittel (5) aus Reibungsmitteln bestehen, die mit der Führungsrolle zusammenwirken.

11. Vorrichtung nach Anspruch 10, **dadurch gekennzeichnet, dass** die Reibungsmittel aus mindestens einem Element (51, 52) bestehen, das eine Fläche aufweist, die vorgesehen ist, auf einer Fläche der sich drehenden Führungsrolle zur Auflage zu kommen.

12. Vorrichtung nach einem der Ansprüche 8 bis 11, **dadurch gekennzeichnet, dass** die Führungsrolle (41) Seitenscheiben (43) umfasst, die mit der Breite des Bandes voneinander beabstandet sind.

13. Vorrichtung nach Anspruch 12, **dadurch gekennzeichnet, dass** die Unterbrechungsmittel (5) mit mindestens einer der Seitenscheiben (43) zusammenwirken.

14. Vorrichtung nach einem der Ansprüche 8 bis 13, **dadurch gekennzeichnet, dass** die sich drehende Führungsrolle beheizt wird.

15. Vorrichtung nach einem der Ansprüche 8 bis 14, **dadurch gekennzeichnet, dass** sie pneumatische Mittel enthält, welche die Unterbrechungsmittel (5) betätigen.

16. Vorrichtung nach einem der Ansprüche 8 bis 15, **dadurch gekennzeichnet, dass** sie eine weitere Führungsrolle (40) umfasst, deren Rotation blockiert, die im Wesentlichen über der sich drehenden Führungsrolle (41) angeordnet und welche mit zwei Seitenscheiben versehen ist, wobei das Band vorgesehen ist, zwischen den beiden Führungsrollen durchgezogen zu werden, die so ein System zur Formung des Bandes auf die gewünschten Abmessungen bilden.
